# FASCICULE DE BREVET EUROPEEN

(11) **EP 2 925 565 B1**
(45) Date de publication et mention de la délivrance du brevet: **14.09.2016**
(21) Numéro de dépôt: 13795772.6
(22) Date de dépôt: 26.11.2013
(51) Int. Cl.: B60R 11/00

(54) **STRUCTURE DE TOIT D'UN VEHICULE AUTOMOBILE**
DACHSTRUKTUR FÜR EIN KRAFTFAHRZEUG
ROOF STRUCTURE OF A MOTOR VEHICLE

(30) Priorité: 27.11.2012 FR 1261261
(43) Date de publication de la demande: 07.10.2015
(73) Titulaire: Renault S.A.S., 92100 Boulogne-Billancourt (FR)
(72) Inventeur: ALBERTO, Gilbert, F-78910 Flexanville (FR)
(86) Numéro de dépôt international: PCT/EP2013/074761
(87) Numéro de publication internationale: WO 2014/083005

(56) Documents cités:
- DE-A1-102009 041 314
- GB-A- 2 398 769

## Description

### Domaine de l'invention :

La présente invention concerne une structure de toit d'un véhicule automobile. L'invention se rapporte plus précisément à une structure de toit d'un véhicule automobile, comprenant une traverse avant et une traverse intermédiaire de pavillon située à l'arrière de la traverse avant, lesquelles s'étendent suivant la direction transversale du véhicule, la structure comprenant également un support d'équipements reliant ces traverses l'une à l'autre sensiblement en leur milieu. La traverse intermédiaire de pavillon est classiquement située au niveau du montant latéral dénommé « pied-B », correspondant au montant arrière d'une porte avant du véhicule.

### Etat de la technique et problème posé :

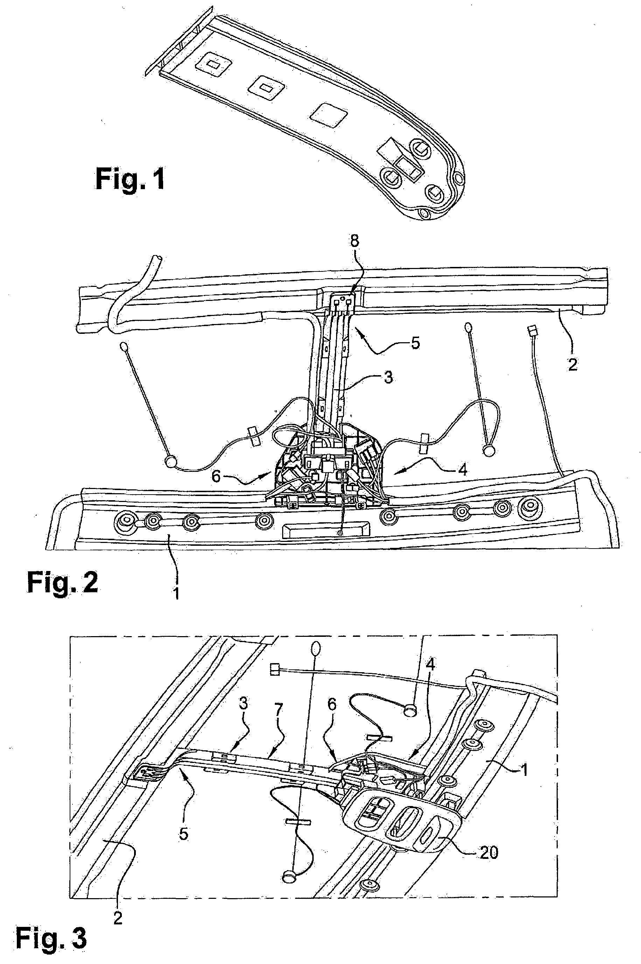

On connaît une structure de toit de ce type, telle qu'illustrée à la figure 1, dans laquelle le support d'équipement est un élément en tôle emboutie. Un tel élément forme un support pour des câbles ou d'autres composants. Il peut en outre constituer un moyen de fixation d'une poignée de toit. Un tel support nécessite cependant des pièces de fixation intermédiaires, tel que des agrafes ou autres clips de liaison pour le maintien des câbles ou des composants. Ces pièces de fixation imposent une fabrication et un pré-assemblage spécifiques sur le support. De plus, lors de sa fixation au toit du véhicule, un tel support doit être positionné et maintenu par l'opérateur tant au niveau de l'avant que de l'arrière, ce qui constitue une tâche peu aisée et peu ergonomique compte tenu de la position « bras en l'air » de l'opérateur. Par ailleurs, un tel support connu a un poids non négligeable.

DE 10 2009 041314 A1 divulgue une structure de toit selon le préamble de la revendication 1.

Le but de l'invention est de pallier tout ou partie des inconvénients précédents.

### Objet de l'invention :

A cet effet, l'invention a pour objet une structure de toit d'un véhicule automobile, comprenant une traverse avant et une traverse intermédiaire de pavillon située à l'arrière de la traverse avant, lesquelles s'étendent suivant la direction transversale du véhicule, la structure comprenant également un support d'équipements reliant ces traverses l'une à l'autre sensiblement en leur milieu, caractérisé en ce que le support comporte à une première extrémité des moyens d'indexation pénétrant suivant la direction longitudinale du véhicule dans des orifices correspondants ménagés dans l'une des traverses, ces moyens d'indexation assurant un positionnement suivant les directions transversale et verticale tandis que la première extrémité coopère en appui suivant la direction longitudinale avec un flan vertical de ladite traverse, et en ce que le support comporte à une seconde extrémité des conformations de clippage assurant un prémaintien suivant la direction verticale avec l'autre traverse, le support étant en outre fixé solidairement à l'une et l'autre des traverses par des vis traversant chacune des extrémités du support.

Le support de l'invention est constitué d'une seule pièce qui intègre en elle-même des conformations adaptées à la fixation rapide de différents équipements (câble, connecteurs électriques, autres). Il n'est donc pas nécessaire de fabriquer et assembler diverses pièces de fixation intermédiaires. Le support est en outre typiquement réalisé en matière plastique ce qui lui confère une grande légèreté tout en étant suffisamment rigide compte tenu des nervures prévues à cet effet.

Ce support comporte également des moyens d'indexation (mise en position relative) par rapport aux traverses avant et intermédiaire, ainsi que des moyens de prémaintien qui facilitent particulièrement les opérations d'assemblage avec la structure du véhicule et améliorent ainsi l'ergonomie. Le support est également découvrable et accessible, par exemple en démontant une console de toit, ce qui permet d'intervenir sans difficulté lors d'opérations de réparation ou de mise à niveau d'équipements spécifiques. En effet, des câbles peuvent être prévus d'office, tandis que certains équipements multimédias ou autres sont installés ou non en première monte, ou peuvent être ultérieurement installés en après-vente à la demande du client, en étant alors raccordés aux câbles correspondants.

Selon d'autres caractéristiques avantageuses de l'invention :
- la première et la seconde extrémités du support sont respectivement ses extrémités avant et arrière, lesquelles sont fixées sur les traverses avant et intermédiaire,
- le support est une pièce en plastique injecté, comportant des conformations de clippage de câbles et/ou de connecteurs électriques et/ou de détecteur(s)/émetteur(s) de signaux sans fil,
- le support comporte des conformations de clippage d'une console centrale de toit intégrant des commandes fonctionnelles et/ou témoins de visualisation,
- le support comporte depuis son extrémité avant et jusqu'à son extrémité arrière :
   - une platine formant une zone élargie sur laquelle sont situées plusieurs conformations de clippage,
   - une poutre structurelle reliant la platine à la traverse intermédiaire, cette poutre étant notamment pourvue d'agrafe(s) et/ou de conformations de clippage de câbles réparties le long de la poutre,
   - une patte de fixation sur la traverse intermédiaire
- la traverse intermédiaire comporte une face inférieure pourvue d'un renfoncement en son milieu, ce renfoncement accueillant la patte d'extrémité du support formant un décrochement vers le bas relativement à la poutre,
- les conformations de clippage assurant le prémaintien de l'extrémité arrière du support avec la traverse intermédiaire sont adaptées pour absorber les dispersions géométriques de fabrication et de montage entre la traverse avant et la traverse intermédiaire,
- le support comprend des nervures de rigidification localisées sur la poutre, la platine ainsi que la patte de fixation opposée à la platine.

### Description détaillée de l'invention :

L'invention sera mieux comprise à la lecture de la description suivante d'un exemple non limitatif de l'invention, et à la lumière des dessins annexés sur lesquels :
- la figure 1 représente une vue d'un support d'équipements selon l'art antérieur,
- les figures 2 et 3 sont des vues d'ensemble des traverses avant et intermédiaire entre lesquelles est monté un support d'équipements suivant l'invention,
- les figures 4 et 5 sont des vues à plat respectivement de dessous et de dessus du support d'équipements selon l'invention,
- la figure 6 est une vue partielle de l'extrémité avant du support selon l'invention, indexée et fixée sur la traverse avant de la structure de toi,
- la figure 7 est une vue de dessous de l'extrémité avant du support selon l'invention, illustrant la région de la platine,
- la figure 8 est une vue partielle de l'extrémité arrière du support de l'invention, illustrant les moyens de prémaintien et la fixation du support sur la traverse intermédiaire,
- les figures 9 et 10 sont des vues de la patte de l'extrémité arrière du support appliquée et fixée sur la traverse intermédiaire au niveau du renfoncement central.
- la figure 11 est une vue partielle en perspective de l'extrémité avant du support de l'invention sur laquelle est en partie fixée la console de toit.

Dans la description qui suit, les directions sont indiquées en référence au repère classique XYZ du véhicule dans lequel X désigne la direction longitudinale du véhicule, orientée vers l'arrière, Y la direction transversale au véhicule, orientée vers la droite, et Z la direction verticale.

On a représenté aux figures 2 et 3 des traverses avant 1 et intermédiaire 2 d'un véhicule automobile selon l'invention (la partie tôlée du toit n'est pas représentée). Ces traverses 1, 2 sont sensiblement parallèles entre elles et s'étendent transversalement à la direction longitudinale X du véhicule automobile sur toute la largeur du véhicule. La traverse intermédiaire 2 est située au droit du « pied-B » du véhicule, correspondant classiquement au montant arrière de l'encadrement de porte avant. Les traverses sont des éléments de structure en tôle emboutie ayant une section transversale sensiblement en cuvette ou en U dont la partie concave est tournée vers le haut et dont les bords sont soudés à la tôle de pavillon du véhicule.

Un support d'équipements multifonctions 3 est monté entre les traverses avant 1 et arrière 3. Ce support 3 relie ces traverses 1, 2 sensiblement en leur milieu.

Le support 3 est typiquement réalisé en matière plastique injectée.

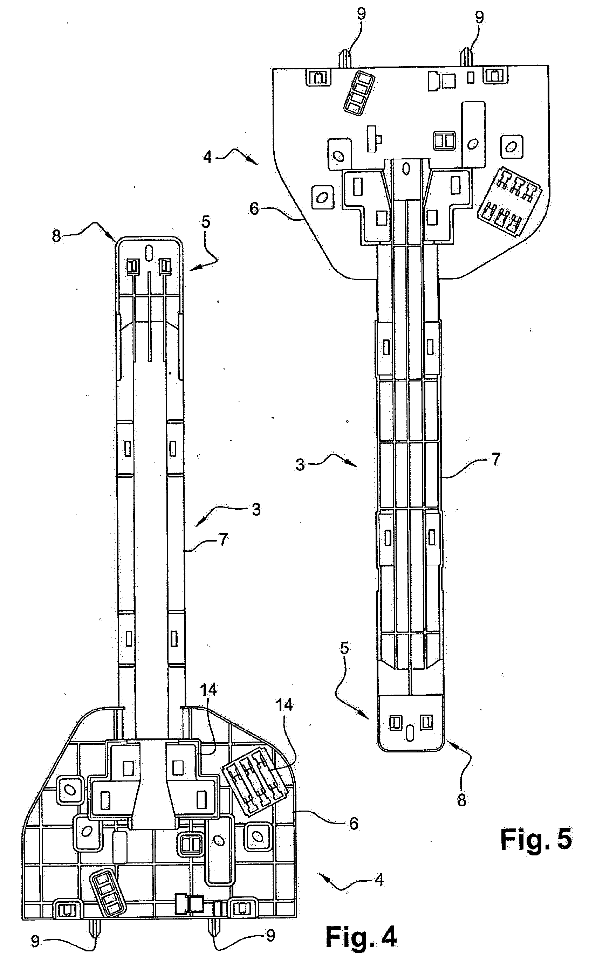

Comme illustré aux figures 4 et 5, le support 3 a une forme générale allongée s'étendant suivant la direction longitudinale X. Il comporte depuis son extrémité avant 4 et jusqu'à son extrémité arrière 5 :
- une platine 6 formant une zone élargie sur laquelle sont situées plusieurs conformations de clippage,
- une poutre 7 centrale structurelle reliant la platine 6 à la traverse intermédiaire 2, cette poutre étant notamment pourvue d'agrafe(s) et/ou de conformations de clippage de câbles réparties le long de la poutre 7,
- une patte 8 de fixation de la poutre 7 sur la traverse intermédiaire 2.

En référence aux figures 4 à 7, le support 3 comporte à son extrémité avant 4 des moyens d'indexation 9, typiquement constitués de deux pions s'étendant suivant la direction longitudinale X, ayant chacun une extrémité en pointe et un corps nervuré, dont la section transversale a la forme générale d'une croix. Ces moyens d'indexation 9 sont conformés pour s'introduire de façon ajustée dans des orifices correspondants ménagés dans la traverse avant 1. Ces orifices sont ménagés dans une face sensiblement verticale arrière de la traverse avant 1. Ces moyens d'indexation 9 sont ajustés avec les bords des orifices pour assurer un positionnement suivant les directions transversale Y et verticale Z. De plus la première extrémité 4 du support, et plus précisément un bord avant sensiblement rectiligne de la platine 6 coopère en appui suivant la direction X avec la même face de la traverse avant 1 de manière à réaliser un positionnement adéquat du support 3 suivant la direction X par rapport à la traverse avant 1.

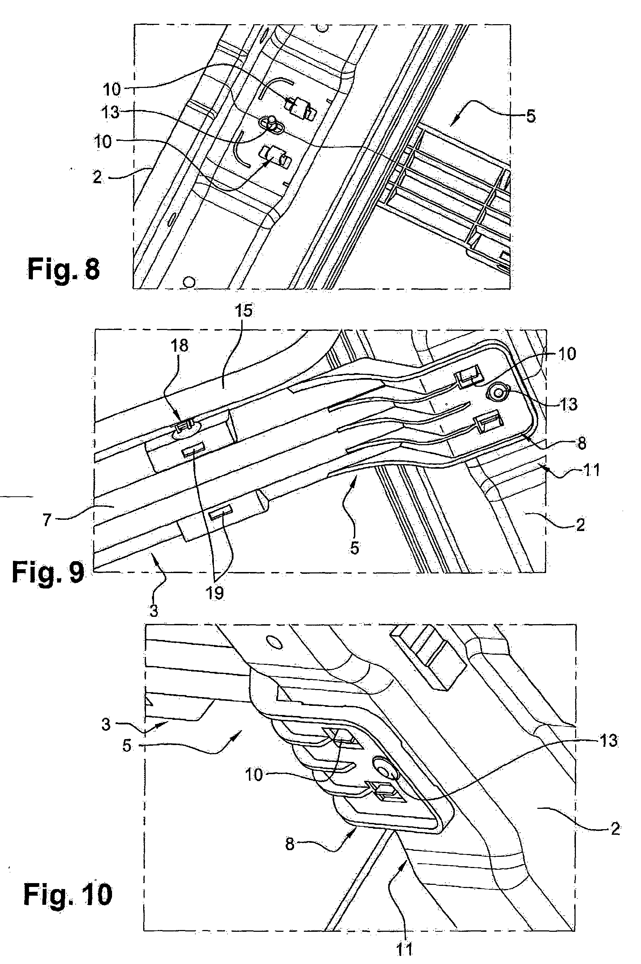

Comme représenté aux figures 8 et 9, le support 3 comporte à une extrémité arrière 5 des conformations de clippage 10 situées sur la patte de fixation 8.

Celles-ci sont constituées de pattes à déformation élastiques pénétrant verticalement dans des orifices correspondants ménagés dans la face inférieure horizontale de la traverse intermédiaire 2. Ces orifices ont une dimension suivant la direction longitudinale X qui est supérieure à la dimension des pattes, de sorte à absorber des dispersions de fabrication ou de positionnement entre les traverses avant 1 et intermédiaire 2. Typiquement ici, les orifices recevant les conformations de clippage 10 ont une forme générale allongée suivant la direction longitudinale X.

La traverse intermédiaire 2 comporte une face inférieure pourvue d'un renfoncement 11 en son milieu (figures 9-10), ce renfoncement 11 accueillant la patte d'extrémité 8 du support 3 formant un décrochement vers le bas relativement à la poutre 7. Le renfoncement 11 permet d'intégrer l'épaisseur de la patte 8 dans l'épaisseur globale de la traverse intermédiaire 2, de sorte que le garnissage de pavillon (non représenté) puisse être appliqué et accolé à la traverse sans former de surépaisseur à l'endroit de la patte 8.

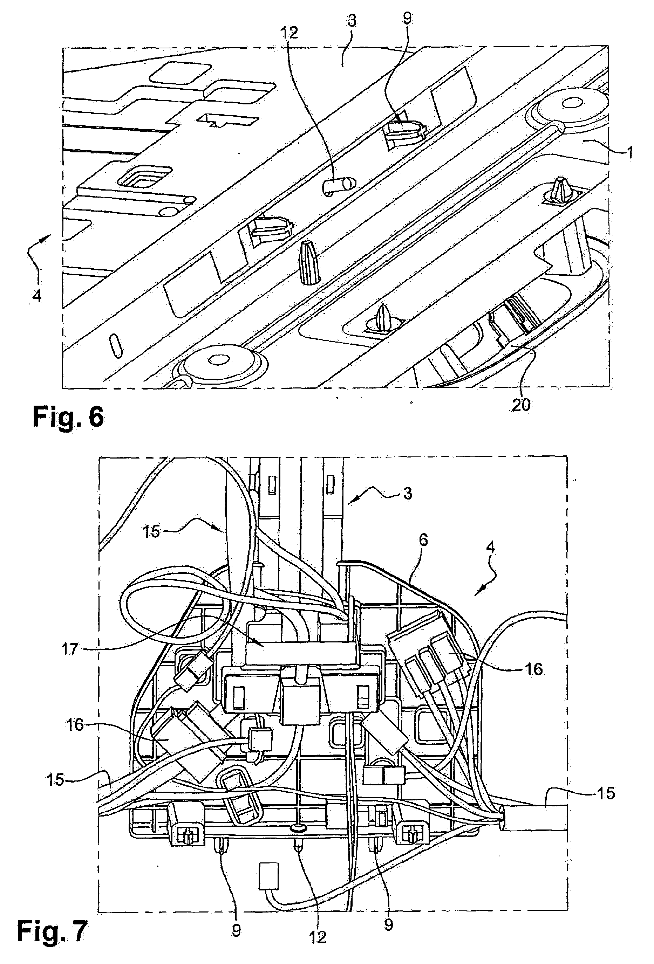

Le support 3 étant en outre fixé solidairement à l'une et l'autre des traverses () par des vis à l'avant 12 (figures 6-7) et à l'arrière 13 (figures 8-10) traversant chacune des extrémités du support 3. A l'avant une vis 12 est par exemple située entre les moyens d'indexation 9 et orientée parallèlement à ceux-ci, cette vis étant vissée dans la face contre laquelle le support 3 est en appui. A l'arrière une vis 13 est vissée verticalement dans la face inférieure horizontale contre laquelle la patte est en appui et prémaintenue par les conformations de clippage 10.

Le support 3 comporte des conformations de clippage 14 (figure 4) de câbles 15 (figure 7) et/ou de connecteurs électriques 16 et/ou de détecteur(s)/émetteur(s) 17 de signaux sans fil. Ces câbles 15 sont typiquement des câbles d'alimentation des feux arrière, des câbles d'alimentation de climatisation, des câbles multimédia (navigation, radio). Les détecteurs/émetteurs 17 de signaux sans fil sont par exemple liés au système de navigation. Ils peuvent inclure une antenne de réception d'un système d'accès main libre (par exemple à carte ou badge) ou toute autre antenne ou émetteur/récepteur. Ces exemples sont donnés à titre purement illustratif et ne sont nullement limitatifs. Le support 3 comprend ainsi un ensemble de formes ou logements complémentaires aux câbles et équipements précités permettant de maintenir ces derniers par clippage. On note que le support peut également recevoir des agrafes par clippage, ces agrafes étant elles-mêmes pourvues de colliers ou moyens de clippage complémentaires pour le maintien des câbles dans des zones particulières. Par exemple deux agrafes 18 sont disposées le long de la poutre 7 du support 3 permettant de maintenir un câble 15 courant le long de cette poutre 7 entre la traverse avant 1 et la traverse arrière 2.

La poutre inclut avantageusement des orifices 19 (figure 9) donnant accès à une partie cachée de ces agrafes 18, à l'aide d'un outil adapté tel qu'un tournevis, permettant de démonter ces agrafes sans avoir à démonter entièrement le support 3 ou risquer de casser un élément.

De nombreuses conformations de clippage 14 sont localisées et concentrées sur la platine 6 à l'avant du support 3, qui constitue ainsi une zone technique riche en équipements divers, permettant des réparations aisées ou des mises à niveau souhaitées.

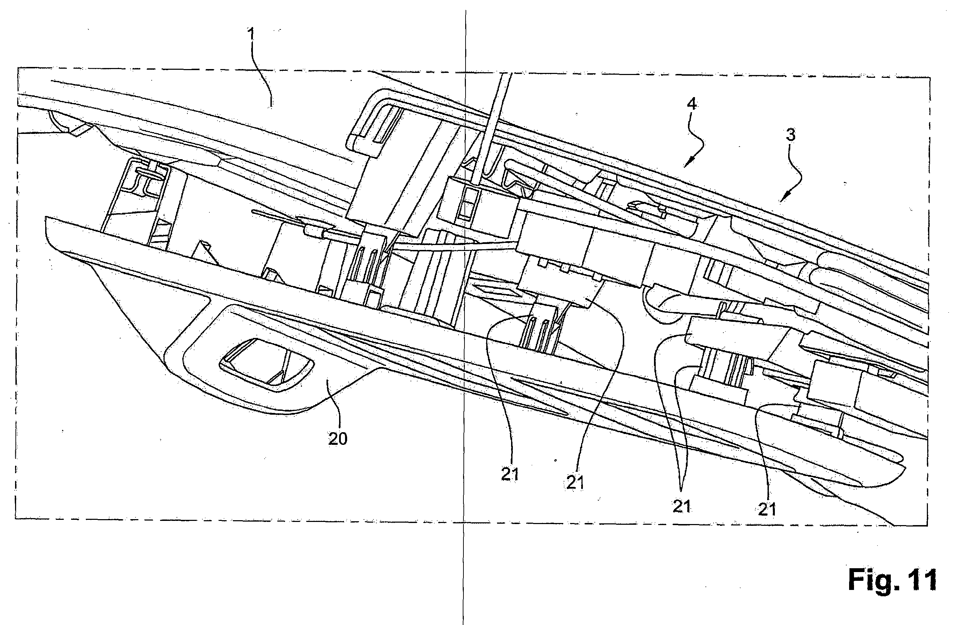

Le support 3 comporte par ailleurs des conformations de clippage 21 d'une console centrale 20 de toit (figures 3, 6, 11) intégrant des commandes fonctionnelles et/ou des témoins de visualisation divers. Ces conformations de clippage 21 sont par exemple en saillie vers le bas ou reçoivent des pattes de clippage correspondantes formées sur la console de toit 20. Dans le cas illustré, la console de toit 20 est en partie fixée sur la platine 6 du support 3 via des conformations de clippage adaptées, et en partie sur la traverse avant 1 (figure 11).

Le support 3 selon l'invention réalisé en matière plastique comprend avantageusement des nervures de rigidification réparties sur toute sa surface et en particulier dans la zone de la poutre 7, permettant de garantir une tenue mécanique adéquate.

Une telle structure de toit comprenant un tel support 3 permet de faire passer un grand nombre de câbles dans la zone centrale du toit, ce qui n'encombre pas les zones latérales du toit où sont prévus d'autres équipements, en particulier des sacs gonflables ou airbags ®.

Le support 3 de l'invention est léger, robuste, multifonctions (support d'équipements divers), peu agressif et aisé à mettre en place lors du montage sur le véhicule. L'ergonomie de montage est particulièrement améliorée compte tenu de l'indexation et du prémaintien sur les traverses. Bien entendu, l'invention n'est pas limitée aux modes ou variantes de réalisation décrits précédemment et comprends tous les équivalents techniques de ces moyens.

## Revendications

1. Structure de toit d'un véhicule automobile, comprenant une traverse avant (1) et une traverse intermédiaire (2) de pavillon située à l'arrière de la traverse avant (1), lesquelles s'étendent suivant la direction transversale (Y) du véhicule, la structure comprenant également un support (3) d'équipements reliant ces traverses l'une à l'autre sensiblement en leur milieu, **caractérisé en ce que** le support (3) comporte à une première extrémité (4) des moyens d'indexation (9) pénétrant suivant la direction longitudinale (X) du véhicule dans des orifices correspondants ménagés dans l'une des traverses (1, 2), ces moyens d'indexation (9) assurant un positionnement suivant les directions transversale (Y) et verticale (Z) tandis que la première extrémité (4) coopère en appui suivant la direction longitudinale (X) avec un flan vertical de ladite traverse (1), et **en ce que** le support (3) comporte à une seconde extrémité (5) des conformations de clippage (10) assurant un prémaintien suivant la direction verticale (Z) avec l'autre traverse (2), le support (3) étant en outre fixé solidairement à l'une et l'autre des traverses (1, 2) par des vis (12, 13) traversant chacune des extrémités (4, 5) du support (3).

2. Structure de toit selon la revendication 1, **caractérisée en ce que** la première (4) et la seconde (5) extrémités du support (3) sont respectivement ses extrémités avant et arrière, lesquelles sont fixées sur les traverses avant (1) et intermédiaire (2).

3. Structure de toit selon la revendication 1 ou 2, **caractérisée en ce que** le support (3) est une pièce en plastique injecté, comportant des conformations de clippage (14) de câbles (15) et/ou de connecteurs électriques (16) et/ou de détecteur(s)/émetteur(s) (17) de signaux sans fil.

4. Structure de toit selon la revendication 3, **caractérisée en ce que** le support (3) comporte des conformations de clippage (21) d'une console centrale (20) de toit intégrant des commandes fonctionnelles et/ou témoins de visualisation.

5. Structure de toit selon la revendication 3 ou 4, **caractérisée en ce que** le support comporte depuis son extrémité avant (4) et jusqu'à son extrémité arrière (5) :
- une platine (6) formant une zone élargie sur laquelle sont situées plusieurs conformations de clippage (14, 21),
- une poutre (7) structurelle reliant la platine (6) à la traverse intermédiaire (2), cette poutre étant notamment pourvue d'agrafe(s) et/ou de conformations de clippage de câbles réparties le long de la poutre (7),
- une patte (8) de fixation sur la traverse intermédiaire (2).

6. Structure de toit selon la revendication 5, **caractérisée en ce que** la traverse intermédiaire (2) comporte une face inférieure pourvue d'un renfoncement (11) en son milieu, ce renfoncement (11) accueillant la patte d'extrémité (8) du support (3) formant un décrochement vers le bas relativement à la poutre (7).

7. Structure de toit selon l'une quelconque des revendications 2 à 6, **caractérisée en ce que** les conformations de clippage (10) assurant le prémaintien de l'extrémité arrière (5) du support (3) avec la traverse intermédiaire (2) sont adaptées pour absorber les dispersions géométriques de fabrication et de montage entre la traverse avant (1) et la traverse intermédiaire (2).

8. Structure de toit selon l'une quelconque des revendications précédentes, **caractérisé en ce que** le support (3) comprend des nervures de rigidification localisées sur la poutre (7), la platine (6) ainsi que la patte (8) de fixation opposée à la platine (6).

## Patentansprüche

1. Dachstruktur für ein Kraftfahrzeug, umfassend eine vordere Traverse (1) und eine Zwischentraverse (2) des Fahrzeugdachs, die sich hinter der vorderen Traverse (1) befindet, welche sich nach der Querrichtung (Y) des Fahrzeugs erstrecken, wobei die Struktur ebenfalls einen Träger (3) von Ausrüstungen, der diese Traversen weitestgehend in ihrer Mitte miteinander verbindet, aufweist, **dadurch gekennzeichnet, dass** der Träger (3) an einem ersten Ende (4) Indizierungsmittel (9), die nach der Längsrichtung (X) des Fahrzeugs in entsprechende Öffnungen, die in einer der Traversen (1, 2) eingelassen sind, eindringen, aufweist, wobei diese Indizierungsmittel (9) eine Positionierung nach der Querrichtung (Y) und der senkrechten Richtung (Z) sicherstellen, während das erste Ende (4) nach der Längsrichtung (X) mit einem senkrechten Plättchen der genannten Traverse (1) in Abstützung zusammenwirkt, und dass der Träger (3) an einem zweiten Ende (5) Ausbildungen zum Verklemmen (10) aufweist, die eine Vorfixierung nach der senkrechten Richtung (Z) mit der anderen Traverse (2) sicherstellen, wobei der Träger (3) darüber hinaus fest mit der einen und der anderen der Traversen (1, 2) durch Schrauben (12, 13), die jedes der Enden (4, 5) des Trägers (3) durchqueren, verbunden ist.

2. Dachstruktur nach Anspruch 1, **dadurch gekennzeichnet, dass** das erste (4) und das zweite (5) Ende des Trägers (3) respektive sein vorderes und hinteres Ende sind, welche an der vorderen Traverse (1) und der Zwischentraverse (2) befestigt sind.

3. Dachstruktur nach Anspruch 1 oder 2, **dadurch gekennzeichnet, dass** der Träger (3) ein Teil aus eingespritztem Kunststoff ist, welches Ausbildungen zum Verklemmen (14) von Kabeln (15) und/oder elektrischen Verbindern (16) und/oder Sensor(en)/Sender(n) (17) für kabellose Signale aufweist.

4. Dachstruktur nach Anspruch 3, **dadurch gekennzeichnet, dass** der Träger (3) Ausbildungen zum Verklemmen (21) einer zentralen Dachkonsole (20), welche funktionale Bedienelemente und/oder Anzeigeleuchten enthält, aufweist.

5. Dachstruktur nach Anspruch 3 oder 4, **dadurch gekennzeichnet, dass** der Träger von seinem vorderen Ende (4) bis zu seinem hinteren Ende (5) aufweist:
- eine Platine (6), die eine erweiterte Zone bildet, an der sich mehrere Ausbildungen zum Verklemmen (14, 21) befinden,
- einen strukturellen Balken (7), der die Platine (6) mit der Zwischentraverse (2) verbindet, wobei dieser Balken insbesondere mit Klammer(n) und/oder Ausbildungen zum Verklemmen von entlang dem Balken (7) verteilten Kabeln versehen ist,
- einen Steg (8) zur Befestigung an der Zwischentraverse (2).

6. Dachstruktur nach Anspruch 5, **dadurch gekennzeichnet, dass** die Zwischentraverse (2) eine Unterseite aufweist, die in ihrer Mitte mit einer Vertiefung (11) versehen ist, wobei diese Vertiefung (11) den Endsteg (8) des Trägers (3), der eine Verformung nach unten relativ zum Balken (7) bildet, aufnimmt.

7. Dachstruktur nach einem der Ansprüche 2 bis 6, **dadurch gekennzeichnet, dass** die Ausbildungen zum Verklemmen (10), die die Vorfixierung des hinteren Endes (5) des Trägers (3) mit der Zwischentraverse (2) sicherstellen, angepasst sind, um geometrische Herstellungs- und Montageabweichungen zwischen der vorderen Traverse (1) und der Zwischentraverse (2) zu absorbieren.

8. Dachstruktur nach einem der vorangehenden Ansprüche, **dadurch gekennzeichnet, dass** der Träger (3) am Balken (7), an der Platine (6) sowie am Befestigungssteg (8) gegenüber der Platine (6) lokalisierte Versteifungsrippen umfasst.

## Claims

1. Roof structure of a motor vehicle, comprising a front cross member (1) and an intermediate roof cross member (2) located behind the front cross member (1), said cross members extending in the transverse direction (Y) of the vehicle, the structure also comprising an equipment support (3) connecting these cross members to one another substantially in the middle thereof, **characterized in that** the support (3) includes, at its first end (4), indexing means (9) that penetrate in the longitudinal direction (X) of the vehicle into corresponding orifices provided in one of the cross members (1, 2), these indexing means (9) ensuring positioning in the transverse (Y) and vertical (Z) directions, while the first end (4) interacts in a bearing manner in the longitudinal direction (X) with a vertical flank of said cross member (1), and **in that** the support (3) includes, at a second end (5), clip-fastening structures (10) to ensure its pre-retention in the vertical direction (Z) with the other cross member (2), the support (3) also being attached securely to both of the cross members (1, 2) by means of screws (12, 13) that pass through each of the ends (4, 5) of the support (3).

2. Roof structure according to Claim 1, **characterized in that** the first (4) and the second (5) ends of the support (3) are respectively its front and rear ends, which ends are secured on front (1) and rear (2) cross members.

3. Roof structure according to Claim 1 or 2, **characterized in that** the support (3) is a component made of injection molded plastic, including clip-fastening structures (14) for cables (15) and/or for electrical connectors (16) and/or for wireless signal transceiver(s) (17).

4. Roof structure according to Claim 3, **characterized in that** the support (3) includes clip-fastening structures (21) for a roof center console (20) incorporating operating controls and/or visual displays.

5. Roof structure according to Claim 3 or 4, **characterized in that** the support includes, from its front end (4) as far as its rear end (5):
- a plate (6) forming an enlarged zone, located on which are a plurality of clip-fastening structures (14, 21),
- a structural beam (7) connecting the plate (6) to the intermediate cross member (2), said beam being provided in particular with one or more clips and/or with clip-fastening structures for cables distributed along the beam (7),
- an attachment foot (8) on the intermediate cross member (2).

6. Roof structure according to Claim 5, **characterized in that** the intermediate cross member (2) includes a lower face provided with a recess (11) at its center, said recess (11) receiving the end foot (8) of the support (3) forming a deflection facing downwards relative to the beam (7).

7. Roof structure according to any of Claims 2 to 6, **characterized in that** the clip-fastening structures (10) ensuring the pre-retention of the rear end (5) of the support (3) with the intermediate cross member (2) are adapted to absorb the geometric variations in production and assembly between the front cross member (1) and the intermediate cross member (2).

8. Roof structure according to any of the preceding claims, **characterized in that** the support (3) comprises stiffening ribs located on the beam (7), the plate (6) and the attachment foot (8) opposite the plate (6).
